Europäisches Patentamt

European Patent Office

Office européen des brevets

(19)

(11) Publication number: **0 063 477**

A1

(12)

# EUROPEAN PATENT APPLICATION

(21) Application number: **82301947.6**

(22) Date of filing: **15.04.82**

(51) Int. Cl.³: **B 65 G 3/04**
**B 65 G 65/28**

(30) Priority: **15.04.81 ZA 812506**

(43) Date of publication of application:
**27.10.82 Bulletin 82/43**

(84) Designated Contracting States:
**BE DE GB IT NL**

(71) Applicant: **Barnish, Leonard Sinclair**
**8 Rutland Avenue Craighall Park**
**Johannesburg Transvaal(GB)**

(72) Inventor: **Barnish, Leonard Sinclair**
**8 Rutland Avenue Craighall Park**
**Johannesburg Transvaal(GB)**

(74) Representative: **Haggart, John Pawson et al,**
**Page, White & Farrer 27 Chancery Lane**
**London, WC2A 1NT(GB)**

(54) A storage structure adapted to accommodate particulate material.

(57) A storage structure adapted to accomodate particulate material is suitable for the bulk storage of particulate coal on the wharf of an export harbour complex. The structure has a circular outer shell (10) bounding a number of generally hexagonal cells (12). The cells (12) are apertured at high level to permit gravitational filling by a load conveyor (18) which is centrally anchored and radially movable. Reclaiming devices (32) having bucket grabs which can be lowered into selected cells (12) recover coal from the cells and discharge the coal onto reclaiming conveyors which transfer it into hoppers located in a central cell (36). Coal is fed from the hoppers via an extraction conveyor disposed in a tunnel (42), which conveyor can feed the coal directly into a ship alongside the wharf.

Fig. 2.

- 1 -

A Storage Structure adapted to
accomodate Particulate Material

THIS invention concerns a storage structure suitable for the storage of particulate material.

Previously, coal and the like particulate material has been stored on wharves and at similar handling locations in piles known as open surge stockpiles. One disadvantage associated with such stockpiled coal is environmental pollution which can arise from dust being blown from the pile. Another disadvantage associated with these stockpiles is the relatively large area over which the base of the pile extends, resulting in a relatively inefficient use of storage space.

It is accordingly an object of this invention to provide an arrangement with which these disadvantages are at least minimised.

- 2 -

According to the invention a storage structure adapted to accommodate particulate material includes a plurality of substantially vertically juxtaposed cells, the cells being apertured at high level to permit their being gravitationally filled with the material.

The cells may be of circular cross-sectional configuration which are arranged in generally honeycomb fashion.

The cells are preferably of substantially hexagonal cross-sectional configuration and may similarly be arranged in honeycomb fashion.

The cells are preferably disposed within a substantially circular outer shell but it will be apparent that the structure may be of any convenient

- 3 -

shape in plan view.

The structure preferably includes loading means progressively to load material into the cells.

The loading means may include a conveyor anchored on the structure to traverse over the loading apertures of the cells.

Preferably the conveyor comprises an endless, reversible stack conveyor.

The conveyor may be radially disposed and centrally anchored above the structure to rotate over the cells. With this arrangement, any selected one of the cells may be charged with material.

In one embodiment of a storage structure according to the invention, delivery means for transporting material to a chute associated with the loading means is provided.

In this form of structure according to the invention, the chute may be located centrally and may act to feed material directly onto the loading means.

The structure may include at least one reclaiming device anchored for movement over the structure, the reclaiming device providing means to remove batches of material from the cells.

Preferably the reclaiming device is centrally anchored and includes at least one endless belt conveyor adapted to receive material from the batch or chain removal means.

- 5 -

The batch removal means may comprise a radially movable bucket grab which may be capable of weighing each load of material removed from the cell before transfer to the conveyor associated with the reclaiming device.

In this form of structure according to the invention, the bucket grab preferably discharges material into two spaced belt or chain conveyors, the zone between the belts being occupied by a slide arrangement having an apex radially disposed centrally beneath the bucket which serves to feed the conveyors simultaneously.

The endless conveyors associated with the reclaiming device may discharge material into a hopper which may be centrally disposed in the structure.

Further conveying means may be associated with the hopper and serve to carry material therefrom. The provision of a hopper not only eliminates cyclic batch recovery but also enables two unlike materials to be mixed where a plurality of reclaiming devices are provided.

In this embodiment of a storage structure according to the invention, the conveying means is preferably located in a tunnel in the structure, which tunnel is disposed in the region of the corners between adjacent cells.

A cover for each cell may be provided comprising a domed lid providing a central receiving hatch and an air bleed duct.

The receiving hatch on the cover may be capable of being coupled to a delivery chute associated with the feed conveyor.

The air bleed duct may pass from the cell being loaded to one of a number of smaller peripheral cells, the air bleed duct acting as a cyclone to entrain the airborne dust released when delivering material to the cell.

The cells may also be associated with a fire protection device.

In one form, the cells may be associated with an inert gas supply for treatment of unstable material fed to the cells.

In another form, the storage structure may be provided with a water supply system which may be used to flood the cells if the temperature rise rate in the material becomes critical.

The storage structure according to the invention is intended to be particularly suitable for the storage of various grades of coal in, for example, the export complex of a harbour. It will, however, be apparent that the structure will be suitable for use generally where relatively large quantities of coal, ore or the like material are stored, for example in power stations.

The storage structure may be sunken or partially sunken and the number and size of the cells may vary in accordance with requirements at the storage or handling location.

An exemplary embodiment of the invention will now be described below by way of illustration only with reference to the accompanying drawings in which :

Figure 1       is a plan view of a storage structure according to the invention,

Figure 2    is a cross-sectional side elevation of
            the structure of Figure 1,

Figure 3    is a front elevation of a reclaiming
            device according to the invention, and

Figure 4    is a cross-sectional side view of a
            part of a cover for a cell according to
            the invention.

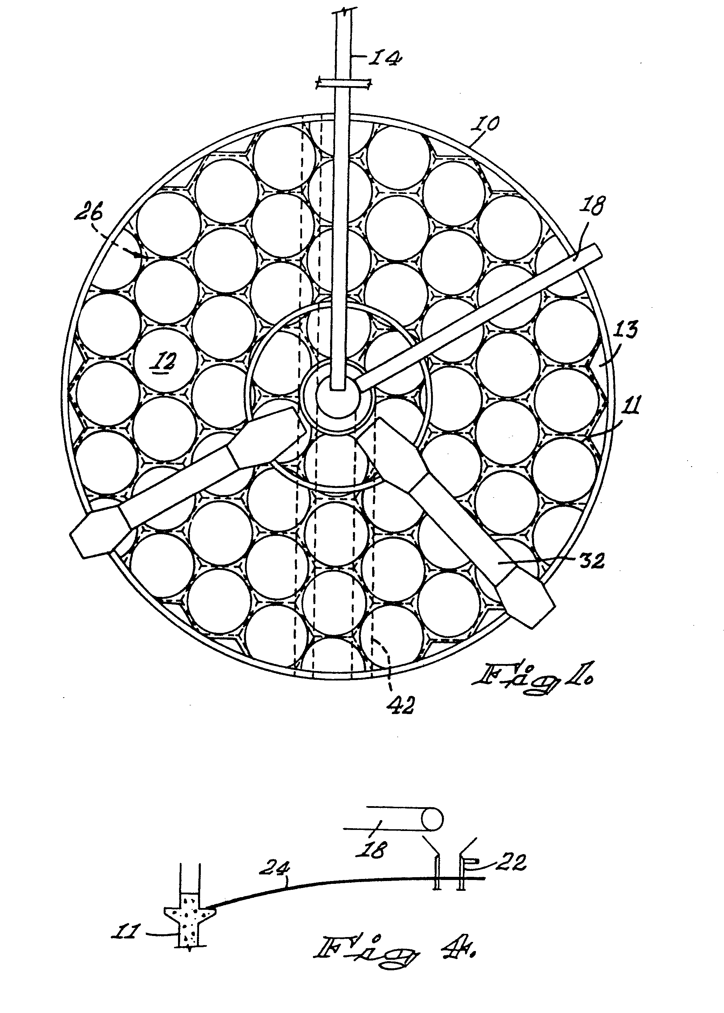

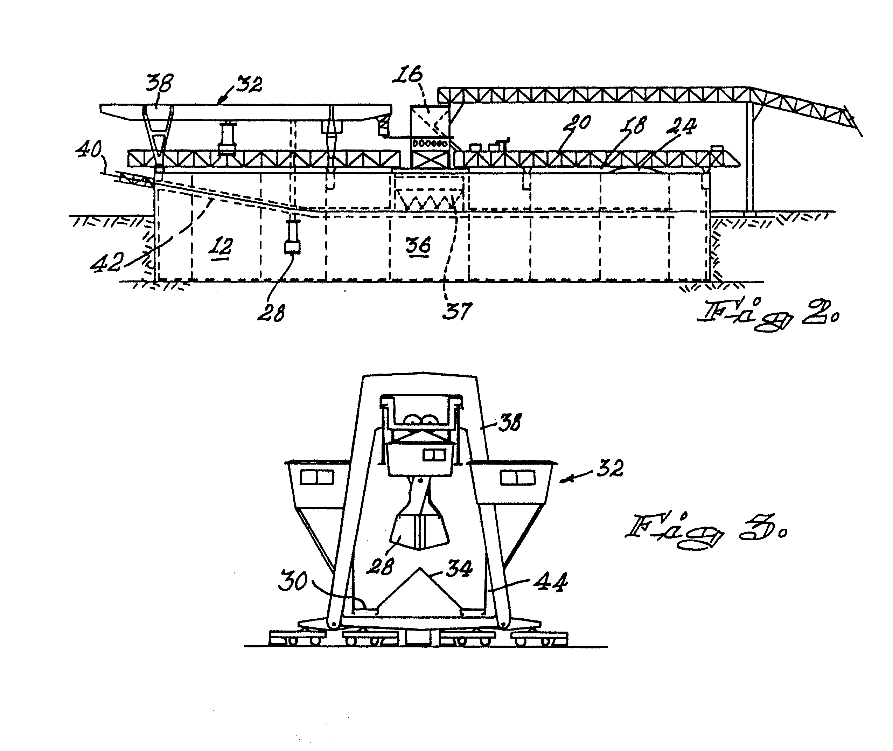

Referring to the drawings, a storage structure according to the invention includes a substantially circular outer wall 10 defining a shell within which a plurality of storage cells 12 are disposed. The shell 10 and walls 11 of the cells 12 are constructed from concrete but may be steel or other suitable materials and the structure is partially sunken below the level of the ground as shown in Figure 2 of the drawings.

Each cell 12 is of substantially hexagonal cross-sectional configuration and a number of peripheral cells 13 which are non-hexagonal are provided. Thus, the storage structure comprises a substantially circular outer shell 10 having a generally honeycomb-like internal structure.

The cells 12 are adapted to be loaded with particulate material such as coal [not shown] and the arrangement is particularly suitable for use as a coal handling and storage facility at an export harbour complex.

The structure includes loading means having a delivery conveyor belt 14 associated with a chute 16 located centrally of the structure. The chute 16 is in turn associated with a loading conveyor 18 which feeds material into the cells 12. The loading conveyor 18 is anchored centrally of the structure and is supported within a housing which is both radially movable and capable of being extended and retracted so as to discharge coal into any selected one of the cells.

A discharge chute [not shown] may be provided for the loading conveyor, the chute being capable of being matingly coupled to a receiving hatch 22 in a cover 24 for the cell to be loaded. A network of air bleed ducts, indicated generally by the numeral 26 are located in the junction of the cell walls. The ducts 26 terminate in one or more of the empty peripheral cells 13 and act as a cyclone to entrain airborne dust released upon loading the cell 12.

The cell capacity may be varied according to the requirements at the export or like facility. For example, each cell may be of a size suitable for the storage of one train load, or of a half-train load of coal.

- 12-

One of more conventional bucket grabs 28 supported on a gantry 38 over a similarly anchored and movable housing provided with a pair of reclaiming conveyors 30 are provided. The reclaiming device is indicated generally by the numeral 32 and, as shown in Figure 1, two such devices 32 are provided in the exemplary embodiment of the invention.

The grabs 28 incorporate means [not shown] to weigh coal removed from the cell 12. A slide 34 is provided having an apex radially disposed beneath each grab 28. A pair of reclaiming conveyors 30 are disposed on either side of the slide 34. Two grabs 28 together with their slides 34 are provided on each gantry 38.

A central cell 36 includes hoppers 37 or the like feeding devices at the end of the reclaiming conveyors 30 remote from the grabs 28. The hoppers 38 are associated with an extraction conveyor 40 disposed within a tunnel 42 constructed in the region of the corners of adjacent cells. The tunnel 42

- 13-

leads exteriorly of the storage structure and may be constructed so as to be capable of discharging coal directly into the hold of a ship alongside the wharf in the vicinity of the structure.

In operation, incoming coal is fed from a source such as a railway truck via the delivery conveyor 14 to the chute 16. The chute 16 is arranged to feed coal directly on to the reversible stack load conveyor 18, the end of which is positioned over the hatch 22 of a selected cell 12. The coal thus spills from the end of the load conveyor 18 and falls through the hatch 22 into the cell 12. In this manner, the cells 12 are filled.

Applicant intends that the coal may be fed to the cells via the delivery and load conveyors 14 and 18 respectively at a rate of up to 5 000 tons per hour and that each cell will have a capacity of up to 11,350 tons of coal.

- 14-

With the arrangement according to the invention, water and air may be substantially prevented from entering the loaded cell, thus reducing the possibility of spontaneous combustion.

Also with this arrangement, stored coal can only absorb a minimal amount of rainfall, which applicant estimates will be in the region of less than 0,1% per 25mm of rainfall. The disadvantages of windborne dust and hazardous and costly drainage pollution associated with previous arrangements are also substantially minimized.

Coal is removed from the cells by way of the reclaiming devices 32 which comprise bucket grabs 28 associated with spaced reclaiming conveyors 30. The grabs 28 are radially movable and are provided on gantry supports 38 housing the conveyors 30. Each reclaiming device 32 is radially movable over the cells 12. The grabs 28 are thus capable of being lowered into any selected cell 12 to remove a batch of coal therefrom.

The grabs 28 discharge their load onto the slide 34 so that coal is fed simultaneously to both reclaiming conveyors 30. Conveyors 30 feed the coal to the hoppers 37 disposed within the central cell 36.

The central cell 36 provided with hoppers 37 or like feed devices reduce the cyclic batch recovery characteristics of open stockpiles and also enable two dissimilar particulate materials to be mixed. The arrangement also permits continuation of the cell discharge process even though ship loading hatch changes necessitate a cessation of the extraction operation.

When loading a ship alongside the structure takes place, the hoppers 37 feed material onto the extraction conveyor 40. The remote end of conveyor 40 may, for example, be positioned over the open hatch of the ship so that the extracted coal is fed directly into the hold.

Applicant envisages an arrangement whereby the rate of coal extraction could be up to 3 400 tons per hour when two discharge support gantries each having twin grabs of 20 ton capacity are operational. This arrangement could discharge coal from four cells simultaneously.

The loading and discharge operations may be carried out simultaneously and the conveyors 14, 18 and 30 are preferably housed within support structures which are provided with closure walls [not shown] so as to enclose the conveyors in operation, thereby ensuring a minimum of undesirable moisture content absorption while the coal is stored and substantially no absorption when the coal is conveyed to or from the storage arrangement.

Also, as the coal is weighed during reclamation by the grab, parcel weighing is possible and draft surveying, with its concomitant addition to vessel berth time, is no longer necessary.

With the storage arrangement according to the invention, ground utilization is approximately 27 tons per square metre compared with open stockpile storage of between approximately 5 to 6 tons per square metre.

Although the invention has been described and illustrated with reference to a presently preferred embodiment, it will be apparent to those skilled in the art that many variations or modificatiions are possible without departing from the scope of the appended claims. Thus, for example, empty cells may be cleaned or drained by way of a pneumatic cleaner and applicant envisages an arrangement whereby a pneumatic discharge device could replace the mechanical grabs.

0063477

- 18 -

<u>Claims</u>

1. A storage structure adapted to accommodate particulate material characterized in a plurality of substantially vertically juxtaposed cells, the cells being apertured at high level to permit their being gravitationally filled with the material.

2. The stucture of Claim 1 characterized in that the cells are of circular cross-sectional configuration.

3. The structure of Claim 1 characterized in that the cells are of hexagonal cross-sectional configuration arranged in honeycomb fashion.

4. The structure of any one of the above claims characterized in that the cells are disposed within a substantially circular outer shell.

5.    The structure of any one of the above claims characterized in loading means progressively to load material into the cells.

6.    The structure of Claim 5 characterized in that the loading means includes a conveyor anchored on the structure to traverse over the loading apertures of the cells.

7.    The structure of Claim 6 characterized in that the conveyor comprises an endless, reversible stack conveyor.

8.    The structure of either Claim 6 or Claim 7 characterized in that the conveyor is radially disposed and is anchored centrally above the structure to rotate over the cells.

9. The structure of any one of Claims 5 to 8 characterized in delivery means for transporting material to a chute associated with the loading means.

10. The structure of Claim 9 characterized in that the chute is located centrally of the structure and acts to feed directly on to the reversible stack loading conveyor.

11. The structure of any one of the above claims characterized in at least one reclaiming device anchored for movement over the structure, the reclaiming device providing means to remove batches of material from the cells.

12. The structure of Claim 11 characterized in that the reclaiming device is centrally anchored and includes at least one endless conveyor adapted to receive material from the batch removal means.

13. The structure of either Claim 11 or Claim 12 characterized in that the batch removal means comprises a radially movable bucket grab.

14. The structure of Claim 13 characterized in that the bucket grab discharges material on to two spaced conveyors, the zone between the conveyors being occupied by a slide arrangement having an apex radially disposed centrally beneath the bucket which serves to feed the belts simultaneously.

15. The structure of any one of Claims 12 to 14 characterized in that the endless conveyor discharges material into a hopper.

16. The structure of Claim 15 characterized in that the hopper is centrally disposed in the structure.

17.    The structure of either Claim 15 or Claim 16 characterized in that conveying means serves to carry material from the hopper.

18.    The structure of Claim 17 characterized in that the conveying means is located in a tunnel in the structure.

0063477

Fig 1.

Fig 4.

Fig 2.

Fig 3.

0063477

0063477

European Patent
Office

**EUROPEAN SEARCH REPORT**

Application number

EP 82 30 1947

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-B-1 078 943 (F.SIEGLER) <br><br> *Page 1, column 1, lines 29-54; figures* | 1,4,5, 6,7,8, 9,10, 11,15, 16,17, 18 | B 65 G 3/04 <br> B 65 G 65/28 |
| A | US-A-3 471 041 (W.PARSONS) <br><br> *Abstract; figures* | 1,5,6, 7,11, 13,15, 17 | |
| A | FR-A-1 471 197 (J.P.A.MARTIN) <br><br> *Page 1, column 2, line 18 to page 3, column 1, line 61; figures* | 1,5,6, 11 | |
| | | | **TECHNICAL FIELDS SEARCHED (Int. Cl. 3)** |
| A | DE-C- 329 887 (H.KOPPERS) <br> *Page 2, lines 37-56; figures* | 1,5,11 | B 65 G <br> B 65 D |
| A | DE-C- 383 056 (C.VON GRUEBER) <br><br> *The whole document* | 5,9,11 ,13,15 ,16,17 ,18 | |
| A | US-A-3 358 855 (K.CARTON et al.) <br> *Column 5, lines 25-58; figures* | 14 | |

The present search report has been drawn up for all claims

| Place of search <br> THE HAGUE | Date of completion of the search <br> 19-07-1982 | Examiner <br> VAN ROLLEGHEM F.M. |
|---|---|---|

**European Patent Office**

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | CH-A- 431 020 (J.D.WILSON) *Column 10, lines 16-19* --- | 3 | |
| A | DE-B-1 012 450 (SILBERKUHL) *Column 2, lines 30-44* ----- | 2,4 | |

TECHNICAL FIELDS SEARCHED (Int. Cl. ³)

The present search report has been drawn up for all claims

| Place of search THE HAGUE | Date of completion of the search 19-07-1982 | Examiner VAN ROLLEGHEM F.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82